# EUROPEAN PATENT SPECIFICATION

(11) **EP 1 986 565 B1**
(45) Date of publication and mention of the grant of the patent: **10.10.2018**
(21) Application number: 07811807.2
(22) Date of filing: 21.02.2007
(51) Int. Cl.: A61C 19/04

(54) **WIRELESS ROOT CANAL APEX LOCATOR**
DRAHTLOSER APEXLOKALISATOR FÜR WURZELKANAL
LOCALISATEUR RADIO D'APEX DE CANAL RADICULAIRE

(30) Priority: 22.02.2006 US 775691 P
(43) Date of publication of application: 05.11.2008
(73) Proprietor: DENTSPLY SIRONA Inc., York, PA 17401-2991 (US)
(72) Inventor: MAXWELL, Randall, Broken Arrow, OK 74012 (US); GARROTT, Charles E., Tulsa, OK 74136 (US)
(74) Representative: Hartz, Nikolai
(86) International application number: PCT/US2007/062500
(87) International publication number: WO 2007/136900

(56) References cited:
- WO-A-2005/070325
- WO-A-2005/077298
- US-A- 5 902 105

## Description

### Technical Field

The present invention generally relates to dental apex locators. More particularly, the invention is a wireless apex locator that has a data display unit.

### Background of the Invention

Conservative dentistry and oral pathology suggest therapeutic treatment of a carious tooth rather than extraction thereof. Consequently, the endodontic treatment technique of root canal operations involving removal of the pulp, treatment of the canal and filling thereof, are being carried out with increasing frequency.

In performing a root canal operation, it is extremely important for the dentist to accurately determine the length of the root canal when removing pulp therefrom and inserting a filling material therein. For instance, if the dentist should fail to reach the apex of the root canal, healthy tissue may be injured or the decayed pulp is allowed to remain which eventually may result in periodontitis or endodontis.

Generally, the endodontic treatment comprises the steps of opening the carious cavity, cutting the enamel caries, removing the coronal pulp, enlarging the root canal orifice, exploring the root canal, extracting the radicular pulp, enlarging the root canal, and filling the root canal. Normally, numerous probe instruments will be employed to perform this treatment method, including cleansers, reamers, files, and filling tools. Heretofore, the most complex, time-consuming and difficult step in the root canal operation has involved determining the depth of penetration of a reamer or file and precisely controlling and limiting the depth of such reamer or file so as not to penetrate either beyond the root apex or short thereof. One previous method of measuring the root canal length involved the insertion of a thin, flexible probe or explorer into the canal and performing x-ray of the carious tooth in order to determine the depth of penetration of the probe into the canal. Once the accurate measurement had been taken, successively used tools could be set to the proper penetration depth determined by the dentist.

Various instruments have been devised in the past for measuring probe penetration in a root canal, as evidenced by the disclosures of U.S. Patent Numbers 3,916,529; 3,993,044; 3,753,434; 3,894,532; 3,660,901; and, 3,901,216, however, none of the instruments disclosed by such patents have been completely satisfactory in indicating the position of the probe relative to the canal apex with a high degree of sensitivity and accuracy. In this respect, one of the principal problems associated with previous instruments relates to the fact that the meters used by such instruments for visually indicating the penetration depth of the probe includes too many graduations to clearly depict the critical point at which the probe actually reaches the canal apex but does not penetrate through such apex inadvertently. In order to overcome the above-discussed deficiency, some prior art instruments have provided means for actuating an audible or visual alarm, such as a light, when the probe achieves penetration to a critical point immediately adjacent the apex of the root canal. This solution is unsatisfactory because the dentist is not provided with feedback regarding the rate at which the probe is approaching the apex of the canal and may result in the probe going beyond such apex in the event that the dentist's reaction time after actuation of the alarm is not sufficient to slow or discontinue insertion of the probe after the latter has reached a critical point adjacent the canal apex. Furthermore, the use of audible alarms is undesirable since sounds produced by such alarms may be difficult to distinguish in the case of high ambient background noise.

Therefore, electronic apex locators have been commercially introduced. These devices employ an impedance-measuring device that when connected to the lip of a patient receiving root canal therapy wherein an endodontic file in the canal of the root provides a signal corresponding to the distance of the file from the apex of the root canal. The displayed value of the distance to the apex allows the dentist to effectively plan the root canal. A problem with such electronic apex locators has been the numerous cords or cables necessary to control the locator, supply the needed power and the like. A need exists therefore, for a more compact electronic apex locator that does not require as many such connections or cables.

Document WO2005/070325 discloses a wireless root canal locator for use in determining the location of the apex of a patient's root, that includes an electronic module having a battery power source, an impedance analyzer circuit and a radio frequency transmitter; a grounding module having a clip for grounding the patient; a probe module having an endodontic probe; and an associated but not physically connected display unit having a receiver for receiving radio frequency signals from the transmitter. The display unit has an electronic circuit that conditions the signals and interprets the signal for display on a graphic display.

Document US 5,902,105 discloses a dental treatment apparatus with a root canal length measurement function comprising a cordless handpiece equipped with at least a cutting tool drive motor, a root canal length measurement circuit and a power supply battery, and a charger equipped with at least a charge circuit for charging the power supply battery.

### Summary of the Invention

The present invention is an electronic apex locator as defined in claim 1 that has a wireless connection to a data display unit. The dental apex locator is used to determine the location of the apex of root in a patient's root canal so that the dentist does not penetrate the root. Penetration of the apex can result in time-consuming repairs, pain to the patient, infection in certain cases, and in exceptional cases, loss of the tooth. Unlike prior art locators, the apex locator of the present invention does not include wires between the handpiece and a remotely located display unit. Preferred embodiments are defined in the dependent claims.

The handpiece of the present invention includes an electronic module having a battery power source, an impedance analyzer circuit and a radio frequency transmitter. The handpiece further includes a return or lip module and a probe module having an endodontic probe. The endotontic probe, typically a file or cutting tool, is also used to measure the distance of travel along the root canal. The probe module is connected to the return module. The return module includes a clip for attachment to the patient, such as a lip clip. When the return module is attached to the patient, typically at the clip, a circuit is completed, thereby explaining the designation of return module as a return path for the electrical signal from the probe is provided. The handpiece includes a motor for driving the endodontic probe. Because the handpiece is battery-powered, the motor is a direct current (DC) motor and the signal is also a DC signal. No physical ground is provided by the return module. The signal generated by the probe is a low voltage signal and is only present when the circuit is energized. The voltage is sufficiently low that the patient is unaware of its presence.

The impedance analyzer circuit is used to correlate the distance that the endodontic probe moves along the root canal. During operation, the endodontic probe emits an electrical signal, which travels through the circuit. The impedance that the signal encounters in traversing the circuit is analyzed by the impedance analyzer, indicative of location, The RF transmitter in the handpiece, connected to the impedance analyzer, then transmits a signal via RF to a display unit which can receive RF signals and display the location of the probe for viewing by the dental professional.

Because the handpiece transmits information indicative of the probe location in the root canal via RF to the display unit, the display unit can be positioned anywhere in the room and its location will not interfere with the dentist's movements in performing the operation. The dentist can place the display unit at any convenient location in the room where he/she can see the display, which will show the location of the endodontic probe based on the RF signals transmitted by the handpiece. The display unit is powered, normally by standard 110 volt alternating current (AC) power, as its power source. Availability of AC current usually is not a problem in a dental office. However, the display unit may be powered by batteries utilizing DC current, if desired, to provide further flexibility. Maximum flexibility can be provided by a unit that can be powered either by AC or DC current.

Other features and advantages of the present invention will be apparent from the following more detailed description of the preferred embodiment, taken in conjunction with the accompanying drawings which illustrate, by way of example, the principles of the invention.

### Brief Description of the Drawings

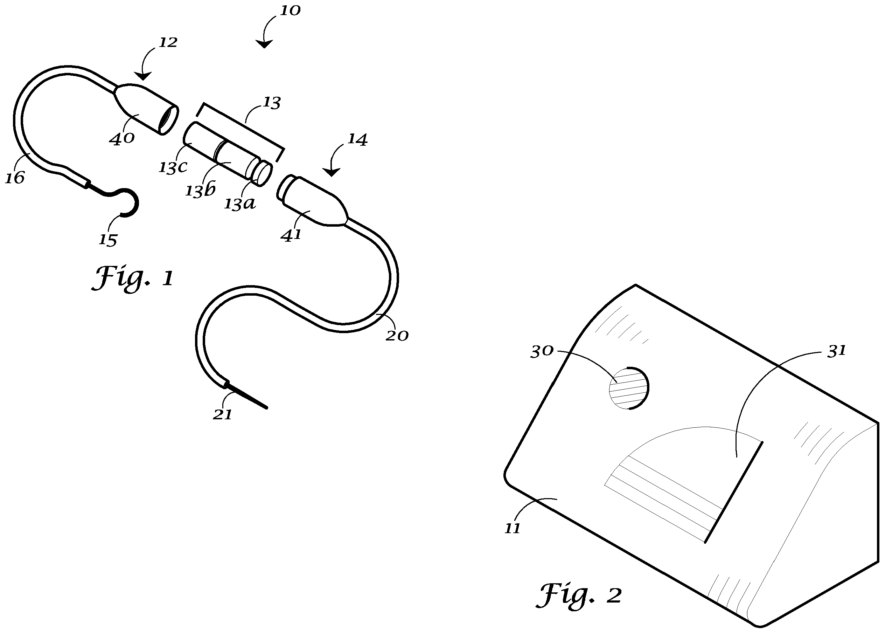

Figure 1 is an exploded view of a wireless apex locator according to an example for better understanding the present invention.
Figure 2 is a perspective view of a display unit to be used with the wireless apex locator of Figure 1.

### Preferred Embodiments for Carrying Out the Invention

A wireless apex locator according to an example for better understanding the present invention is generally designated by the number 10 on the attached drawings. By "wireless" it is meant that apex locator 10 is not physically connected to its associated display unit 11, but communicates information to the display by radio frequency signals as will be more fully discussed herein. The wireless root canal apex locator of the present invention includes as a system the apex locator which measures probe position along the root canal and the display unit that displays the measured probe position for ready viewing by a dental professional.

Apex locator has a lip module 12, an electronic module 13 and a probe module 14. The modules 12, 13 and 14 are preferably electrically and removably affixed to one another. By being removable, the various components can be serviced or cleaned separately.

Lip module 12 has a lip clip 15 for physically engaging a patient's lip. Lip clip 15 is electrically connected to lip module 12 via a suitable cable 16. When lip clip 15 also is connected to the patient, an electrical circuit is formed through lip module 12, electronic module 13, probe module housing, 41, and the probe 21 in a patient's root canal.

Electronic module 13 includes a battery 13a, an impedance analyzer circuit 13b and a radio frequency transmitter 13c. Probe module 14 includes a probe module housing 41 and an electrical connecting cable 20 affixed to an endodontic probe 21. The electronic module 13 and probe module 14 is assembled as part of a handpiece, the electronic module 13 and probe module being capable of easy assembly and disassembly from the handpiece. The handpiece can be ergonomically designed and further includes a DC motor and a switch, the switch activating the DC motor. According to the invention, electronic module 13 is removably housed within the handpiece, while the probe module 14 is assembled at an end of the handpiece with only probe 21 extending from the handpiece, cable 20 being substantially internal to the handpiece. The electric motor, when energized by the switch, activates movement of the probe. The electronic module also sends an electric signal through the circuit, which signal is analyzed by impedance analyzer. A suitable filter may be required to filter noise from the motor so that the electric signal transmitted by probe assembly 41 can be distinguished from motor noise. Alternatively, the electric signal used to locate the position of the probe in the root can be sent through the circuit when the motor is de-energized, so that noise from the motor does not interfere with the signal indicative of circuit impedance. In this alternate embodiment, measurement can be conducted accurately when the motor is de-energized. As the apex is approached, the dental professional may alternatively energize and de-energize the motor to measure the professional's approach to the apex.

Other arrangements are possible. The electronic module 13 can be separate from the probe module with a suitable cable connecting the probe module to the electronic module. The probe module can be housed in an ergonomically designed handpiece. The probe can be inserted into the root canal either separately or as an extension from the handpiece. In either configuration, the probe is connected to the electronic module via cable 20.

Battery 13a is preferably of the rechargeable type, but is not so limited. Depending on the configuration of the lip module 12, electronic module 13 and probe module 14, the battery as well as the electronic module should be removable form the lip module, the probe module and the handpiece so that it is not sterilized when these parts require sterilization. Battery 13a may also be replaceable. Impedance analyzer circuit 13b evaluates the impedance between probe 21 and lip clip 15. Data therefrom is transferred by means of a suitable radio frequency to display unit 11, where it is in turn analyzed and displayed for use by the dental practitioner.

Lip module 12 preferably has a housing member 40 while probe module 14 preferably has a complementary housing member 41. Lip module housing member 40 and probe module housing 41 preferably are configured so that when they are physically engaged, they form an electronic module housing for receiving and holding electronic module 13. This conveniently can be assembled within a handpiece so that cable 16 runs from handpiece to lip clip 15 and cable 20 at the opposite end of the handpiece is connected to probe 21. Housing 40 and housing 41 are easily removable from the handpiece for sterilization. Alternatively, electronic module 13 is easily removable from handpiece so that lip module 12, probe module14 and handpiece can be sterilized as required. The electronic module further includes an RF transmitter for transmitting signals indicative of the position. This assembly will preferably automatically initialize and shut down when continuity is obtained or removed or will operate only when the circuit is energized. This conserves battery power.

Display unit 11 has a graphic display 31 for representing data received from probe 21 via electronic module 13. Display unit 11 may also include appropriate user control interfaces, and also includes a complementary radio frequency receiver 30 that receives radio frequency signals from electronic module 13. Display unit 11 can include an electronic circuit that further conditions the signal and interprets the signal for display on graphic display 31, if sufficient conditioning is not performed by impedance analyzer circuit 13b.

In use apex locator 10 with its associated display unit 1 1 will be operated as follows:
a. The dentist will advance an endodontic file 21 toward the apex of the root canal;
b. The impedance of the probe module 14 will be determined. The impedance will either be conditioned and transmitted as a signal to the display unit 11 via transmitter 13c to indicate the distance from the apex, or the impedance measurement will be transmitted as a signal to the display unit 1 1 via transmitter 13c;
c. The display unit 11 will condition the impedance as required and then graphically display the distance to the apex impedance measurement on graphic display 31 and progression in the canal or the impedance will be displayed on the graphic display are received from the transmitter; and,
d. The display unit will optionally provide audible or other signals to notify the user of the progression in the canal. In this manner, the apex of a root canal is effectively located.

The apex locator as described herein is an advance in the art of such devices. The invention has been described and shown in the drawings without attempting to show all of the possible variations that are within the scope of the invention. The actual scope of the invention will be determined only by any attached claims.

While the invention has been described with reference to a preferred embodiment, it will be understood by those skilled in the art that various changes may be made and equivalents may be substituted for elements thereof without departing from the scope of the appended claims.

## Claims

1. A wireless dental apex locator (10) for use in determining the location of the apex of a patient's root, comprising:
(i) an electronic module (13) having
- a battery power source (13a);
- an impedance analyzer circuit (13b) and
- a radio frequency transmitter (13c);
(ii) a return module (12) having a clip for attachment to the patient;
(iii) a probe module (14) having an endodontic probe (21), wherein the probe emits a signal;
the electronic module (13), the return module (12) and the probe module (14) forming a circuit for the emitted signal that is returned to the impedance analyzer circuit (13b) through the return module (12), and radio frequency transmitting the signal; and
(iv) an associated but not physically connected display unit (11) having a receiver (30) for receiving radio frequency signals from said transmitter (13c), the display unit (11) further displaying the received radio frequency signals on a graphic display, **characterized by**
a handpiece removably housing the electronic module (13), while the probe module (14) is assembled at an end of the handpiece with only probe (21) extending from the handpiece and cable (20) being substantially internal to the handpiece, whereby the handpiece further including a motor for powering the endodontic probe (21) and a second DC power source for powering the motor.

2. The wireless dental apex locator (10) of claim 1 wherein the return module (12) further includes a return module housing and a clip for attachment to the patient connected to the housing with a cable (16).

3. The wireless dental apex locator (10) of claim 2 wherein the clip is a lip clip (15).

4. The wireless dental apex locator (10) of claim 1 wherein the battery power source (13a) for the electronic module (13) is a DC power source.

5. The wireless dental apex locator (10) of claim 4 wherein the DC power source is a low voltage power source.

6. The wireless dental apex locator (10) of claim 1 wherein the impedance analyzer circuit (13b) conditions the returned signal in to indicate a position of the probe (21) in the root, the position being transmitted by the radio frequency transmitter (13c) for display by the display unit (11).

7. The wireless dental apex locator (10) of claim 1 wherein the impedance analyzer circuit (13b) analyzes the impedance in the circuit (13b), the impedance being transmitted by the radio frequency transmitter (13c) to the display unit (11), the display unit (11) further including a conditioning circuit that further conditions the impedance signal to indicate a position of the probe (21) in the root, the position displayed by the display unit (11).

8. The wireless dental apex locator (10) of claim 1 wherein the impedance analyzer circuit (13b) analyzes the impedance in the circuit, the impedance being transmitted by the radio frequency transmitter (13c) to the display unit (11), the display unit (11) displaying the impedance of the circuit (13b).

9. The wireless dental apex locator (10) of claim 1 wherein the handpiece further includes a filter to filter noise from the motor so that the emitted signal can be detected and analyzed.

10. The wireless dental apex locator (10) of claim 1 wherein the return module (12) is removably attached to the handpiece.

11. The wireless dental apex locator (10) of claim 1 wherein the electronic module (13) emits a signal when the motor is de-energized.

12. The wireless dental apex locator (10) of claim 1 wherein the display unit (11) is movable and powered by a standard 110 volt AC outlet.

13. The wireless dental apex locator (10) of claim 1 wherein the display unit (11) is movable and powered by a DC power source.

14. The wireless dental apex locator (10) of claim 1 wherein the battery power source is rechargeable.

## Patentansprüche

1. Drahtloser Apex-Lokalisator (10) für die Verwendung bei der Bestimmung des Orts des Apex der Zahnwurzel eines Patienten, umfassend:
(i) ein elektronisches Modul (13) mit
- einer Batteriestromquelle (13a);
- einer Impedanzanalysatorschaltung (13b) und
- einem Funkfrequenzsender (13c);
(ii) einem Zurücksendemodul (12) mit einem Clip zum Anbringen an dem Patienten;
(iii) einem Sondenmodul (14) mit einer endodontischen Sonde (21), worin die Sonde ein Signal abgibt;
wobei das elektronische Modul (13), das Rücksendemodul (12) und das Sondenmodul (14) eine Schaltung für das abgegebene Signal bilden, das zur Impedanzanalysatorschaltung (13b) über das Zurücksendemodul (12) zurückgesendet wird, und Funkfrequenz das Signal überträgt; und
(iv) eine zugehörige, aber nicht physisch verbundene Anzeigeeinheit (11) mit einem Empfänger (30) für das Empfangen von Funkfrequenzsignalen von dem Sender (13c), wobei die Anzeigeeinheit (11) ferner die empfangenen Funkfrequenzsignale auf einer grafischen Anzeige anzeigt, **gekennzeichnet durch**
ein Handstück, das das elektronische Modul (13) abnehmbar beherbergt, während das Sondenmodul (14) an einem Ende des Handstücks montiert ist, wobei sich nur die Sonde (21) vom Handstück erstreckt und das Kabel (20) sich im Wesentlichen im Handstück befindet, wobei das Handstück ferner einen Motor für die Stromversorgung der endodontischen Sonde (21) und eine zweite Gleichstromquelle für die Stromversorgung des Motors beinhaltet.

2. Drahtloser Apex-Lokalisator (10) nach Anspruch 1, worin das Zurücksendemodul (12) ferner ein Zurücksendemodul-Gehäuse und einen Clip für das Anbringen am Patienten beinhaltet, der mit einem Kabel (16) mit dem Gehäuse verbunden ist.

3. Drahtloser Apex-Lokalisator (10) nach Anspruch 2, worin der Clip ein Lippenclip (15) ist.

4. Drahtloser Apex-Lokalisator (10) nach Anspruch 1, worin die Batteriestromquelle (13a) für das elektronische Modul (13) eine Gleichstromquelle ist.

5. Drahtloser Apex-Lokalisator (10) nach Anspruch 4, worin die Gleichstromquelle eine Niederspannungsstromquelle ist.

6. Drahtloser Apex-Lokalisator (10) nach Anspruch 1, worin die Impedanzanalysatorschaltung (13b) das zurückgesendete Signal konditioniert, um eine Position der Sonde (21) in der Zahnwurzel anzugeben, wobei die Position durch den Funkfrequenzsender (13c) für die Anzeige durch die Anzeigeeinheit (11) übertragen wird.

7. Drahtloser Apex-Lokalisator (10) nach Anspruch 1, worin die Impedanzanalysatorschaltung (13b) die Impedanz in der Schaltung (13b) analysiert, wobei die Impedanz vom Funkfrequenzsender (13c) zur Anzeigeeinheit (11) übertragen wird, wobei die Anzeigeeinheit (11) ferner eine Konditionierungsschaltung beinhaltet, die das Impedanzsignal ferner so konditioniert, dass es eine Position der Sonde (21) in der Zahnwurzel angibt, wobei die Position durch die Anzeigeeinheit (11) angezeigt wird.

8. Drahtloser Apex-Lokalisator (10) nach Anspruch 1, worin die Impedanzanalysatorschaltung (13b) die Impedanz in der Schaltung analysiert, die Impedanz, die vom Funkfrequenzsender (13c) zur Anzeigeeinheit (11) übertragen wird, wobei die Anzeigeeinheit (11) die Impedanz der Schaltung (13b) anzeigt.

9. Drahtloser Apex-Lokalisator (10) nach Anspruch 1, worin das Handstück ferner einen Filter zum Filtern des Rauschens vom Motor beinhaltet, damit das abgegebene Signal erkannt und analysiert werden kann.

10. Drahtloser Apex-Lokalisator (10) nach Anspruch 1, worin das Zurücksendemodul (12) am Handstück abnehmbar angebracht ist.

11. Drahtloser Apex-Lokalisator (10) nach Anspruch 1, worin das elektronische Modul (13) ein Signal abgibt, wenn der Motor ausgeschaltet wird.

12. Drahtloser Apex-Lokalisator (10) nach Anspruch 1, worin die Anzeigeeinheit (11) beweglich ist und von einer üblichen 110-Volt-Netzsteckdose mit Strom versorgt wird.

13. Drahtloser Apex-Lokalisator (10) nach Anspruch 1, worin die Anzeigeeinheit (11) beweglich ist und von einer Gleichstromquelle mit Strom versorgt wird.

14. Drahtloser Apex-Lokalisator (10) nach Anspruch 1, worin die Batteriestromquelle aufladbar ist.

## Revendications

1. Localisateur d'apex dentaire sans fil (10) à utiliser pour la détermination de l'emplacement de l'apex de la racine d'un patient, comprenant :
(i) un module électronique (13) ayant
- une source d'alimentation par batterie (13a) ;
- un circuit analyseur d'impédance (13b) et
- un émetteur radiofréquence (13c) ;
(ii) un module de retour (12) ayant une attache à fixer au patient ;
(iii) un module de sonde (14) ayant une sonde endodontique (21), dans lequel la sonde émet un signal ;
le module électronique (13), le module de retour (12) et le module de sonde (14) formant un circuit pour le signal émis qui est renvoyé au circuit analyseur d'impédance (13b) à travers le module de retour (12) et la fréquence radio transmettant le signal ; et
(iv) une unité d'affichage associée, mais non connectée physiquement (11) ayant un récepteur (30) pour la réception des signaux radiofréquence dudit émetteur (13c), l'unité d'affichage (11) affichant en outre les signaux radiofréquences reçus sur un affichage graphique, **caractérisé par**
une pièce à main logeant de manière amovible le module électronique (13), tandis que le module de sonde (14) est assemblé à une extrémité de la pièce à main avec seulement une sonde (21) s'étendant depuis la pièce à main et le câble (20) étant essentiellement interne à la pièce à main, la pièce à main incluant en outre un moteur pour l'alimentation de la sonde endodontique (21) et une seconde source d'alimentation en courant continu pour l'alimentation du moteur.

2. Localisateur d'apex dentaire sans fil (10) selon la revendication 1, dans lequel le module de retour (12) inclut en outre un boîtier de module de retour et une attache à fixer au patient relié au boîtier avec un câble (16) .

3. Localisateur d'apex dentaire sans fil (10) selon la revendication 2, dans lequel l'attache est une attache à lèvre (15).

4. Localisateur d'apex dentaire sans fil (10) selon la revendication 1, dans lequel la source d'alimentation par batterie (13a) pour le module électronique (13) est une source d'alimentation en courant continu.

5. Localisateur d'apex dentaire sans fil (10) selon la revendication 4, dans lequel la source d'alimentation en courant continu est une source d'alimentation à basse tension.

6. Localisateur d'apex dentaire sans fil (10) selon la revendication 1, dans lequel le circuit d'analyseur d'impédance (13b) conditionne le signal retourné pour indiquer une position de la sonde (21) dans la racine, la position étant transmise par l'émetteur radiofréquence (13c) pour l'affichage par l'unité d'affichage (11).

7. Localisateur d'apex dentaire sans fil (10) selon la revendication 1, dans lequel le circuit analyseur d'impédance (13b) analyse l'impédance dans le circuit (13b), l'impédance étant transmise par l'émetteur radiofréquence (13c) à l'unité d'affichage (11), l'unité d'affichage (11) incluant en outre un circuit de conditionnement qui conditionne en outre le signal d'impédance pour indiquer une position de la sonde (21) dans la racine, la position affichée par l'unité d'affichage (11).

8. Localisateur d'apex dentaire sans fil (10) selon la revendication 1, dans lequel le circuit analyseur d'impédance (13b) analyse l'impédance dans le circuit, l'impédance étant transmise par l'émetteur radiofréquence (13c) à l'unité d'affichage (11), l'unité d'affichage (11) affichant l'impédance du circuit (13b).

9. Localisateur d'apex dentaire sans fil (10) selon la revendication 1, dans lequel la pièce à main comprend en outre un filtre pour filtrer le bruit provenant du moteur de sorte que le signal émis peut être détecté et analysé.

10. Localisateur d'apex dentaire sans fil (10) selon la revendication 1, dans lequel le module de retour (12) est fixé de manière amovible à la pièce à main.

11. Localisateur d'apex dentaire sans fil (10) selon la revendication 1, dans lequel le module électronique (13) émet un signal lorsque le moteur est désexcité.

12. Localisateur d'apex dentaire sans fil (10) selon la revendication 1, dans lequel l'unité d'affichage (11) est mobile et alimentée par une prise de courant alternatif standard de 110 volts.

13. Localisateur d'apex dentaire sans fil (10) selon la revendication 1, dans lequel l'unité d'affichage (11) est mobile et alimentée par une source d'alimentation en courant continu.

14. Localisateur d'apex dentaire sans fil (10) selon la revendication 1, dans lequel la source d'alimentation par batterie est rechargeable.
